**Europäisches Patentamt**

**European Patent Office**

**Office européen des brevets**

(11) Veröffentlichungsnummer: **0 260 449 B1**

(12) **EUROPÄISCHE PATENTSCHRIFT**

(45) Veröffentlichungstag der Patentschrift:
29.08.90

(51) Int. Cl.⁵: **B29C 45/17**, B29C 45/42

(21) Anmeldenummer: 87111864.2

(22) Anmeldetag: 17.08.87

(54) Entnahmevorrichtung für Angüsse an Kunststoff-Spritzgiesmaschinen.

(30) Priorität: 15.09.86 DE 3631314

(43) Veröffentlichungstag der Anmeldung:
23.03.88 Patentblatt 88/12

(45) Bekanntmachung des Hinweises auf die Patenterteilung:
29.08.90 Patentblatt 90/35

(84) Benannte Vertragsstaaten:
DE ES FR GB IT

(56) Entgegenhaltungen:
EP-A- 0 153 625
DE-A- 2 923 037
DE-A- 3 013 198

EUROPEAN PLASTICS NEWS, Band 13, Nr. 11,
November 1986, Seite 106, Sutton, Surrey, GB; "Mould
clamping action powers Rob-o-flex sprue-picker robot"
SOVIET INVENTIONS ILLUSTRATED, Sektion P/Q,
Woche 8441, 21. November 1984, Klasse P62,
Nr. 84-255211/41, Derwent Publications Ltd, London,
GB; & SU-A-1 073 086 (VOROSH MECH ENG) 15-02-1984

(73) Patentinhaber: Firma A. Raymond, Teichstrasse 57,
D-7850 Lörrach(DE)

(72) Erfinder: Hänsel, Mathias, Im Maiacker 12,
D-7842 Kandern 3(DE)

## Beschreibung

Die Erfindung geht aus von der im Oberbegriff des Anspruchs 1 angegebenen Entnahmevorrichtung für Angüsse an Kunststoffmaschinen. Diese Entnahmevorrichtung wird üblicherweise auf dem beweglichen Werkzeugträger so aufmontiert, daß der Greifarm beim Öffnen der Spritzgießform über eine Kurvensteuerungzwangsläufig an den Anguß herangeführt wird und die am unteren Ende befindlichen Greiffinger den Angußstutzen gleichzeitig mit dem Ausstoßen der abgespritzten Teile erfassen können.

Bei einer in der Praxis gebräuchlichen Entnahmevorrichtung dieser Art ist der von einem Hubzylinder beaufschlagte Kurbelarm mit einer Laufrolle versehen, die über eine mit dem feststehenden Werkzeugträger verbundene und mit einer Absenkstufe versehenen Steuerschiene entlangfährt, so daß der Schwenkarm durch die Hubbewegung des Werkzeugträgers auf- und abgeschwenkt wird. Gleichzeitig wird die Lenkstange mittels einer Laufrolle an einer am Gehäuse befestigten Laufkante derart entlanggeführt, daß die Greiffinger in der Endphase der Abwärtsbewegung an den Angußstutzen herangeführt werden.

Nach dem Ergreifen des Angusses werden die Greiffinger durch pneumatisches Strecken der Lenkstange ein wenig vom Werkzeug abgehoben, durch Hochschwenken des Greifarms nach oben geführt und durch Drehen des Schwenkarms seitlich herausgeschwenkt. Dort öffnen sich die Greiffinger automatisch und lassen den Anguß in einen Trichter fallen, der über einer Mahlvorrichtung angeordnet ist. In dieser werden die Angüsse zerkleinert und dann in Säcken zur Wiederverwendung gesammelt.

Bei dieser bekannten Entnahmevorrichtung wird die mechanische Zwangssteuerung des Kurbelarms als Nachteil empfunden, da die hierfür erforderliche, über den Werkzeugen angeordnete Steuerschiene bei jedem Werkzeugwechsel nicht nur demontiert und anschließend wieder montiert, sondern bezüglich der Lage der Absenkstufe auch noch neu ausgerichtet werden muß. Dies kostet Zeit und verzögert den Beginn des nachfolgenden Abgießvorgangs.

Aufgabe der Erfindung ist es daher, den Bewegungsmechanismus der vorliegenden Entnahmevorrichtung einfacher und gleichzeitig im Hinblick auf den Werkzeugwechsel bedienungsfreundlicher zu gestalten.

Diese Aufgabe wird durch die im Anspruch 1 angegebene Erfindung gelöst. Dabei wird der Bewegungsablauf durch ein pneumatisches Steuerventil ausgelöst, welches den Kurbelantrieb bereits nach einem relativ kurzen Öffnungsweg des schließseitigen Werkzeugträgers betätigt.

Das hierfür gemäß Anspruch 2 vorgesehene Schwenkgetriebe ist zweckmäßigerweise mit einer Rückstellfeder ausgestattet, so daß bei Abschalten oder auch störungsbedingtem Ausfall des Druckmittels die Kurbel des Schwenkgetriebes durch die Federkraft automatisch wieder zurückgeschwenkt wird.

Durch den mit der Erfindung erreichten Wegfall der Führungsschiene läßt sich der Werkzeugwechsel in wesentlich kürzerer Zeit als bisher durchführen, wobei die gewonnene Umrüstzeit voll der Produktion zugutekommt. Es gibt nur noch eine einzige zwangsgeführte Laufrolle, was sicherlich auch den Herstellungspreis der Entnahmevorrichtung günstig beeinflußt. Die Laufkanten sind hierbei so ausgerichtet und geformt, daß die Greiffinger bei Betätigung des Schwenkantriebs durch den oberen Kurvenverlauf zunächst kreisbogenförmig bis auf die Höhe der Oberkante des Werkzeugträgers abgesenkt und dann durch den unteren Kurvenverlauf im wesentlichen senkrecht an den Angußstutzen herangeführt werden, so daß die Greiffinger bereits nach kurzem Öffnungsweg des schließseitigen Werkzeugträgers gefahrlos in den freiwerdenden Zwischenraum eintauchen können.

Ein Ausführungsbeispiel der Erfindung ist in der Zeichnung dargestellt und soll nachfolgend näher beschrieben werden.
Es zeigt

Fig. 1 die Entnahmevorrichtung mit erhobenem Greifarm in Warteposition,
Fig. 2 die gleiche Entnahmevorrichtung mit abgesenktem Greifarm in Greifposition,
Fig. 3 den unteren Greifarm mit Greiffinger in Vorderansicht,
Fig. 4 die schematische Darstellung des Schwenk- und Greifarms bei Abwärtsbewegung und
Fig. 5 die gleiche schematische Darstellung bei der Aufwärtsbewegung.

Die in den Figuren dargestellte Angußentnahmevorrichtung besteht aus einem Gehäuse 4 und einem Schwenkarm 5, der in diesem Gehäuse 4 mit einer horizontalen Welle 6 drehbar gelagert und über einen Kurbelantrieb 7 auf- und abschwenkbar ist. Das Gehäuse 4 ruht auf einem Untergestell 1 und ist in diesem um eine vertikale Achse drehbar gelagert. Das Untergestell 1 ist auf einer Führungsschiene 2 verschiebbar befestigt, welche auf den schließseitigen Werkzeugträger 3 in Längsrichtung der Spritzgießmaschine festgeschraubt ist.

Am freien (oberen) Ende des Schwenkarms 5 ist eine Haltelasche 8 drehbar gelagert, in welcher ein Greifarm 9 axial verschiebbar befestigt ist. Die Haltelasche 8 ist ihrerseits mit einer parallel zum Schwenkarm 5 verlaufenden Lenkstange 10 und einer am entgegengesetzten Ende gelagerten Führungslasche 11 nach Art eines Gelenkparallelogramms verbunden. Die Lenkstange 10 weist an ihrem unteren, dem Gehäuse 4 zugekehrten Ende eine Laufrolle 12 auf, die zwischen zwei parallel zueinander verlaufenden, abwärts gerichteten Laufkanten 13 zwangsgeführt ist.

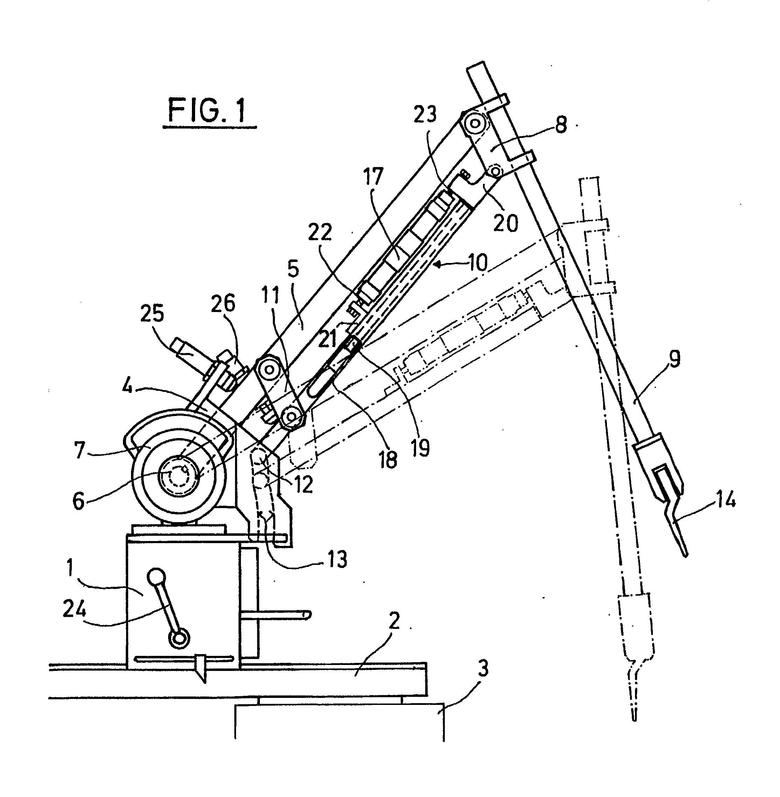

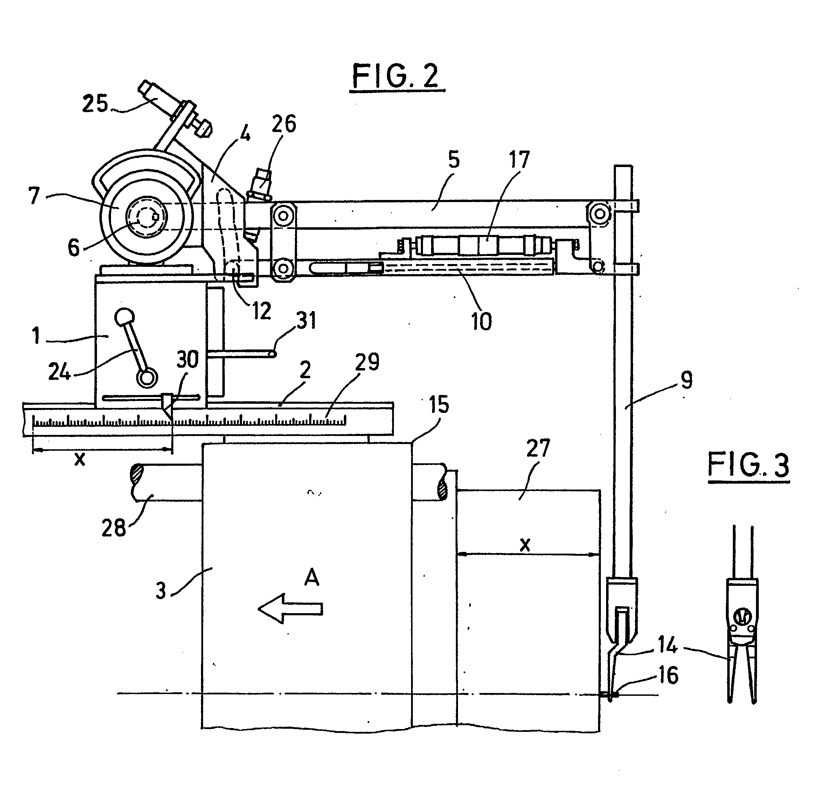

Die Laufkanten 13 sind hierbei in ihrem oberen Bereich bis etwa auf die Höhe der Welle (6) des Schwenkarms 5 konzentrisch zu dieser Welle angeordnet und verlaufen von dort ab in einer sich von der Kreisbahn spiralförmig entfernenden Kurve. Dadurch wird beim Abwärtsschwenken des Schwenkarms 5 die Lenkstange 10 und damit der Greifarm 9 so gesteuert, daß die am unteren Ende des Greifarms 9 befindlichen Greiffinger 14 aus der oberen Warteposition zunächst kreisbogenförmig bis etwa auf die Höhe der Oberkante 15 des Werkzeugträgers 3 abgesenkt (=strichpunktierte Lage in Fig. 1) und dann durch den unteren Kurventeil der Laufkanten 13 im wesentlichen senkrecht und dicht vor dem Spritzgießwerkzeug 27 entlang bis zum vorstehenden Angußstutzen 16 abgesenkt werden (Fig. 2).

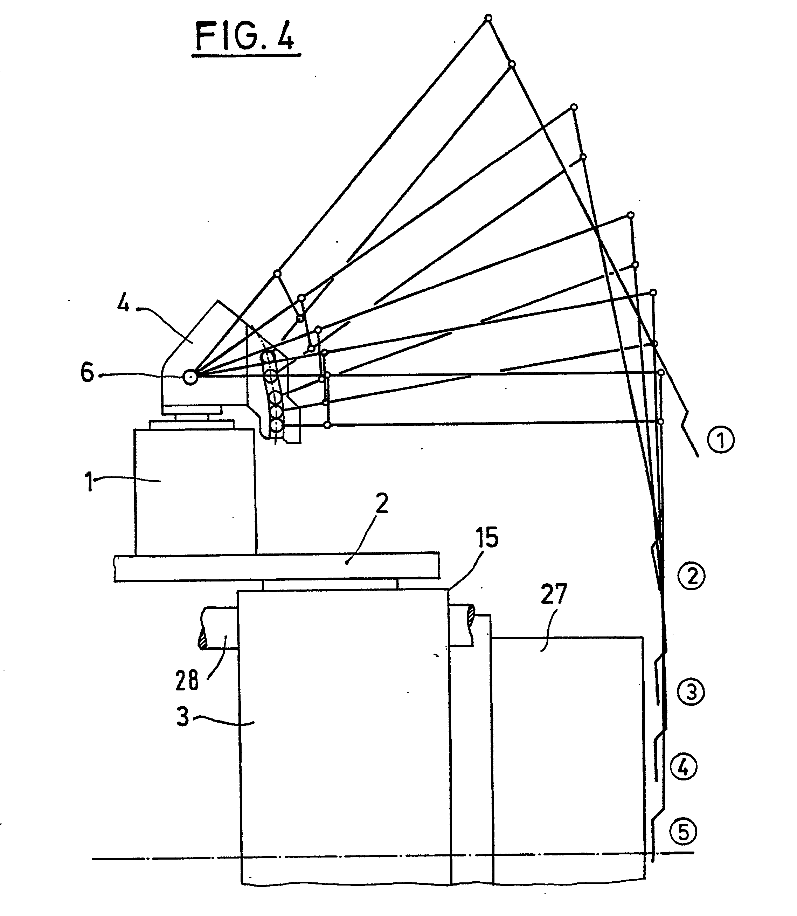

Der Bewegungsablauf des Schwenk- und Greifmechanismus bei der Abwärtsbewegung ist aus Fig. 4 zu ersehen. Sobald der Gießvorgang beendet ist, wird der schließseitige Werkzeugträger 3 mit dem Spritzgießwerkzeug 27 auf den Führungsholmen 28 in Richtung des Pfeiles A zurückgefahren. Nach etwa 80 mm Öffnungsweg wird der Schwenkarm 5 durch den Kurbelantrieb 7 aus der Warteposition 1 (im Kreis) in die Greifposition 5 abgesenkt. Sodann werden die Greiffinger 14 durch einen nicht dargestellten Mechanismus zusammengefahren und dabei der Angußstutzen 16 erfaßt.

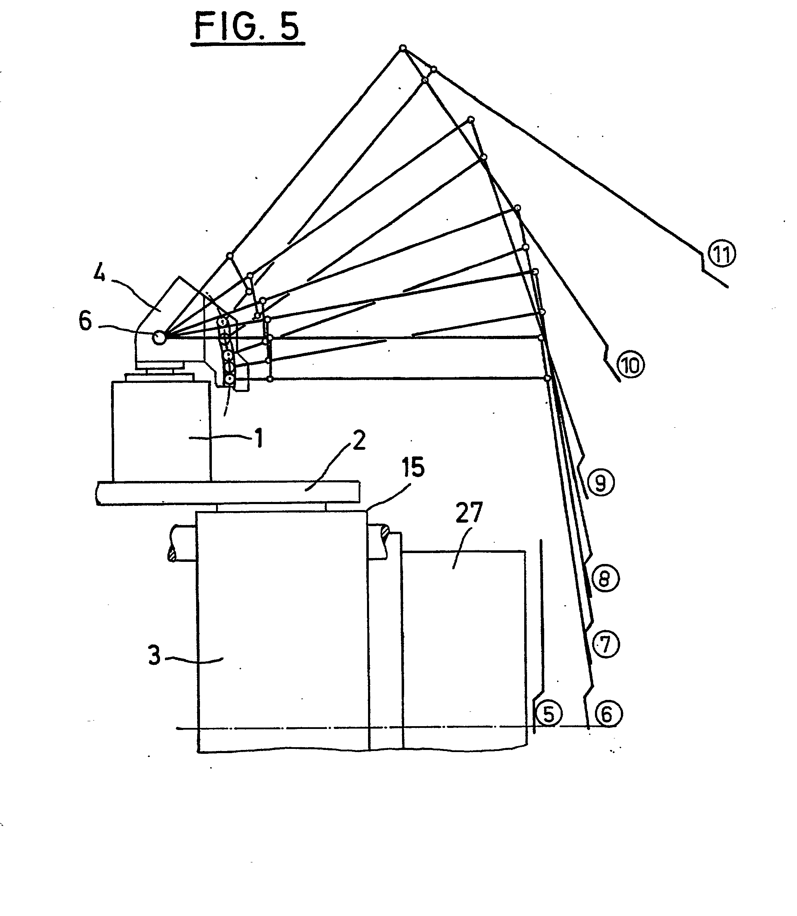

Der weitere Bewegungsablauf nach dem Ergreifen des Angußstutzens 16 ist in Fig. 5 schematisch dargestellt. Zunächst wird der Greifarm 9 bei stillstehendem Schwenkarm 5 von der Werkzeughälfte 27 weg in die Pos. 6 (im Kreis) geschwenkt, dann der Schwenkarm 5 in die Pos. 10 (im Kreis) angehoben und schließlich der Greifarm 9 bei nochmals stillstehendem Schwenkarm 5 in die Pos. 11 (im Kreis) geschwenkt. Um die Greiffinger 14 nach dem Ergreifen des Angußstutzens 16 von der Werkzeughälfte 27 abheben und nach Erreichen der oberen Lage von Pos. 10 nach 11 schwenken zu können, ist die Lenkstange 10 mittels eines Doppelhubzylinders 17 streckbar ausgebildet.

Die Lenkstange 10 besteht zu diesem Zweck aus einem äußeren Rohr 18 und einer darin längsverschieblichen Stange 19, welche über ein Endstück 20 in der Haltelasche 8 drehbar gelagert ist. Auf dem Rohr 18 ist eine Konsole 21 befestigt, welche mit der nach unten vorstehenden Kolbenstange 22 des Hubzylinders 17 verbunden ist, während die nach oben vorstehende Kolbenstange 23 am Endstück 20 befestigt ist. Bei der ersten Streckbewegung der Lenkstange 10 von Pos. 5 nach Pos. 6 wird die untere Kolbenstange 22 mit Druckmittel beaufschlagt, während für die zweite Streckbewegung von Pos. 10 nach Pos. 11 die obere Kolbenstange 23 durch das Druckmittel verschoben wird.

Nach Erreichen der Pos. 11 (im Kreis) wird das Gehäuse 4 um die eingangs erwähnte vertikale Achse gegenüber dem Untergestell 1 um etwa 90° zur Seite geschwenkt, wobei jede geeignete Antriebsart verwendet werden kann. Sodann öffnet sich der Schließmechanismus der Greiffinger 14 und der Anguß fällt in den dafür vorgesehenen, in der Zeichnung nicht dargestellten Trichter und von dort in eine Zerkleinerungsmaschine.

Zur Dämpfung der Aufwärtsbewegung des Schwenkarms 5 kurz vor Beendigung der Hubbewegung des Kurbelantriebs 7 ist am Gehäuse 4 ein Dämpfer 25 befestigt, während ein weiterer, am Schwenkarm 5 befestigter Dämpfer 26 dafür sorgt, daß am Ende der Schwenkbewegung in der unteren Stellung gemäß Fig. 2 ebenfalls keine Erschütterung auftauchen.

Der am Untergestell erkennbare Spannhebel 24 gehört zu einem im Gestell 1 befindlichen Klemmechanismus, mit dem das Untergestell 1 auf der Führungsschiene 2 nach genauer Ausrichtung der Greiffinger 14 auf den Angußstutzen 16 festgeklemmt werden kann.

Zum leichteren und schnelleren Positionieren der Entnahmevorrichtung ist auf der Führungsschiene 2 eine Skala 29 angebracht, die von einem am Untergestell 1 befestigten Zeiger 30 beim Verschieben der Vorrichtung überfahren wird. So kann beim Werkzeugwechsel nach Abmessen der Einbauhöhe "x" der schließseitigen Werkzeughälfte 27 das Untergestell 1 am Haltegriff 31 so weit nach rechts verfahren werden, bis der Zeiger 30 auf der Skala 29, gemessen vom Skalenanfang, den gleichen Wert "x" erreicht hat. Das Untergestell braucht dann nur noch durch Umlegen des Spannhebels 24 auf der Schiene 2 festgeklemmt zu werden. Somit sind auch diese Positionierungsmaßnahmen bestens dazu geeignet, den Bedienungskomfort der Entnahmevorrichtung zu erhöhen und die Umrüstzeiten zu verkürzen.

**Patentansprüche**

1. Vorrichtung zur Entnahme von Kunststoffangüssen an Spritzgießmaschinen, bestehend aus einem Gehäuse (4) und einem darin mit einer horizontalen Welle (6) drehbar gelagerten und über einen Kurbelantrieb schwenkbaren Arm (5), an dessen freiem Ende ein in den Angießbereich ein- und ausschwenkbarer Greifarm (9) drehbar gelagert ist, welcher seinerseits mittels einer parallel zum Schwenkarm verlaufenden Lenkstange (10) und einer am entgegengesetzten Ende gelagerten Lasche (11) mit dem Schwenkarm nach Art eines Gelenkparallelogramms verbunden ist, wobei die Lenkstange (10) an ihrem dem Gehäuse zugekehrten Ende mittels einer Laufrolle (12) entlang einer am Gehäuse angeordneten, abwärts gerichteten Laufkante (13) zwangsgeführt ist, **dadurch gekennzeichnet**, daß die Laufrolle (12) zwischen zwei parallel zueinander verlaufenden Laufkanten (13) zwangsgeführt ist, welche im oberen Bereich konzentrisch zur Welle (6) des Schwenkarms (5) und im unteren Bereich in einer sich von der Kreisbahn spiralförmig entfernenden Kurve verlaufen und zwar derart, daß die am unteren Ende des Greifarms (9) befindlichen Greiffinger (14) etwa von der Höhe der Oberkante (15) des Werkzeugträgers (3) ab im wesentlichen senkrecht an den vorstehenden Angußstutzen (16) herangeführt werden.

2. Entnahmevorrichtung nach Anspruch 1, dadurch gekennzeichnet, daß die Welle (6) des Schwenkarms (5) von einem druckmittelbetätigbaren Kurbelantrieb (7) gedreht wird, welcher sich bei Ausfall des Druckmittels durch Federkraft automatisch zurückstellt.

## Claims

1. Apparatus for the removal of plastics sprues on injection moulding machines, comprising a housing (4) and an arm (5) which is mounted rotatably therein with a horizontal shaft (6) and which can be pivoted by way of a crank drive and at the free end of which a gripping arm (9) is rotatably mounted, which gripping arm can be pivoted into and out of the moulding feed region and which in turn is connected to the pivot arm in the manner of a linkage parallelogram by means of a link member (10) extending parallel to the pivot arm and a bar (11) mounted at the opposite end, wherein at its end towards the housing the link member (10) is positively guided by means of a roller (12) along a downwardly directed running edge (13) disposed on the housing, characterised in that the roller (12) is positively guided between two running edges (13) which extend parallel to each other and which in the upper region extend concentrically with respedt to the shaft (6) of the pivot arm (5) and in the lower region extend in a curve which goes away from a circular path in a spiral configuration, more specifically in such a way that the gripping fingers (14) at the lower end of the gripping arm (9) are moved substantially perpendicularly to the projecting sprue portion (16) approximately from the level of the top edge (15) of the tool carrier (3).

2. A removal apparatus according to claim 1 characterised in that the shaft (6) of the pivot arm (5) is rotated by a pressure fluid-actuable crank drive (7) which is automatically reset by spring force in the event of failure of the pressure fluid.

## Revendications

1. Dispositif pour l'extraction de carottes sur presses à injecter, so composant d'un boitier (4) et d'un arbre horizontal (6) monté tournant à l'intérieure de celui-ci et d'un bras (5) pouvant pivoter par l'intermédiaire d'un système de transmission à manivelle, à l'extrémités duquel se trouve monté tournant un bras de préhension (9) pouvant, par un mouvement pivotant, pénétrer dans et se dégager de la zone de la carotte, qui est lui-même relié au bras pivotant, suivant une configuration en parallélogramme articulé, au moyen d'une tige directrice (10) se déplaçant parallèlement au bras pivotant et d'une attache (11) disposée à l'extrémité opposée, la tige directrice (10) étant en l'occurrence guidée de façon forcée, au niveau de son extrémité faisant face au boitier, par un galet (12), le long d'une arête de roulement (13), orientée vers le bas, disposée sur le boitier, se caractérisant par le fait que le galet (12) est guidé de façon forcée entre deux arêtes de roulement (13) disposées parallèlement l'une par rapport à . -, qui sont concentriques à l'arbre (6) du bras de pivotement (5) dans la partie supérieure et qui décrivent, à la partie inférieure, une courbe en spirale s'éloignant de la trajectoire et ceci dans des conditions telles que les doigts de préhension (14) qui se trouvent à l'extrémité inférieure du bras de préhension (9) sont conduits, sensiblement à partir de la hauteur du rebord supérieur (15) du plateau porte-moules (3), sur la carotte (16) formant saillie, suivant une trajectoire essentiellement verticale.

2. Dispositif extracteur de carottes suivant la revendication 1, se caractérisant par le fait que l'arbre (6) du bras de pivotement (5) est mû en rotation par un système d'entrainement à manivelle pouvant être actionné par un fluide vecteur de pression, qui est automatiquement rappelé par la force exercée par un ressort en cas de défaillance du système d'actionnement par fluide vecteur de pression.

FIG.1

FIG. 2

FIG. 3

EP 0 260 449 B1

# FIG. 4

# FIG. 5